# EUROPEAN PATENT APPLICATION

(11) **EP 4 714 992 A1**
(43) Date of publication of application: **25.03.2026**
(21) Application number: 24811012.4
(22) Date of filing: 16.05.2024
(51) Int. Cl.: C08G 18/48, C08G 18/10, C08G 18/81

(54) **POLYTETRAMETHYLENE GLYCOL-BASED (METH)ACRYLATE COMPOUND**

(30) Priority: 19.05.2023 JP 2023083494
(71) Applicant: Cemedine Co., Ltd., Tokyo 141-8620 (JP)
(72) Inventor: KONNO, Makoto, Tokyo 141-8620 (JP); SAITO, Keisuke, Tokyo 141-8620 (JP); KOTANI, Jun, Tokyo 141-8620 (JP); AKIMOTO, Masato, Tokyo 141-8620 (JP)
(74) Representative: Müller-Boré & Partner Patentanwälte PartG mbB
(86) International application number: PCT/JP2024/018064
(87) International publication number: WO 2024/242005

(57) **Abstract**

Objects are to provide (a) a (meth)acrylate group-containing polymer that does not increase the viscosity of the polymer or solidify even when the molecular weight is increased or the amount of urethane linkages in the polymer backbone is increased; and to provide (b) a polytetramethylene glycol-based (meth)acrylate compound containing a terminal (meth)acrylate group, in which the polytetramethylene glycol-based (meth)acrylate compound containing the terminal (meth)acrylate group is obtained by reaction of at least a polyol compound (a), a chain extender (b), and a terminal (meth)acrylating agent (c), the polyol compound (a) contains a polytetramethylene glycol, the terminal (meth)acrylating agent (c) contains a (meth)acrylate compound containing a functional group reactive with a functional group contained in the chain extender or contains a (meth)acrylate compound containing a functional group reactive with a hydroxy group, and the viscosity at 25°C is 10 Pa·s or more and 300 Pa·s or less. The objects are achieved by providing a polytetramethylene glycol-based (meth)acrylate compound containing a terminal (meth)acrylate group, in which the polytetramethylene glycol-based (meth)acrylate compound containing the terminal (meth)acrylate group is obtained by reaction of at least a polyol compound (a), a chain extender (b), and a terminal (meth)acrylating agent (c), the polyol compound (a) contains a polytetramethylene glycol, the terminal (meth)acrylating agent (c) contains a (meth)acrylate compound containing a functional group reactive with a functional group contained in the chain extender or contains a (meth)acrylate compound containing a functional group reactive with a hydroxy group, and the viscosity at 25°C is 10 Pa·s or more and 300 Pa·s or less.

## Description

### Technical Field

The present invention relates to a polytetramethylene glycol-based (meth)acrylate compound, a cured product obtained by curing the compound, a composition containing the compound and a polymerization initiator, and a cured product obtained by curing the composition.

### Background Art

In recent years, many (meth)acrylate group-containing polymers have been introduced to the market. Examples of (meth)acrylate group-containing polymers include urethane (meth)acrylate polymers. Such a urethane (meth)acrylate can be obtained, for example, by the reaction of a terminal isocyanate group-containing polyurethane with a hydroxy group-containing (meth)acrylate compound, or by the reaction of a terminal hydroxy group-containing polyurethane with an isocyanate group-containing (meth)acrylate compound (for example, Patent Literature 1 to 4).

Urethane (meth)acrylate polymers are used as flexibilizers (elastomer components) in second-generation acrylic resin-based adhesives (SGAs) containing (meth)acrylic monomers and in UV-curable acrylic adhesives. The various performance properties of the urethane (meth)acrylate polymer can be improved by increasing the molecular weight or the amount of urethane linkages in the polymer backbone.

### Citation List

### Patent Literature

PTL 1: Japanese Unexamined Patent Application Publication No. 2021-127381
PTL 2: Japanese Unexamined Patent Application Publication No. 2022-45341
PTL 3: Japanese Unexamined Patent Application Publication No. 2022-103085
PTL 4: Japanese Unexamined Patent Application Publication No. 2022-147672

### Summary of Invention

### Technical Problem

For (meth)acrylate group-containing polymers, in particular, urethane (meth)acrylate polymers, increasing the molecular weight of the polymer or increasing the amount of urethane linkages in the polymer backbone may increase the viscosity of the polymer or cause the polymer to solidify. The increase in viscosity and solidification of (meth)acrylate group-containing polymers pose significant problems when they are formulated as adhesive components.

Therefore, optimization of the selection and combination of polyol compounds, polyisocyanate compounds, terminal acrylating agents, molecular weight, and the like, which constitute (meth)acrylate group-containing polymers, particularly urethane (meth)acrylate polymers, has been performed. However, it has been difficult to increase the molecular weight of the polymer or the amount of urethane linkages in the polymer backbone while inhibiting an increase in polymer viscosity or solidification of the polymer. Accordingly, in order to adjust the viscosity to an appropriate level, organic solvents have been mixed in. Nevertheless, this approach has required improvements in terms of increased environmental burden, higher costs, and additional manufacturing steps.

An object of the present invention is to provide a (meth)acrylate group-containing polymer that does not increase the viscosity of the polymer or solidify even when the molecular weight is increased or the amount of urethane linkages in the polymer backbone is increased.

An object of the present invention is to provide a polytetramethylene glycol-based (meth)acrylate compound containing a terminal (meth)acrylate group, in which the polytetramethylene glycol-based (meth)acrylate compound containing the terminal (meth)acrylate group is obtained by reaction of at least a polyol compound (a), a chain extender (b), and a terminal (meth)acrylating agent (c), the polyol compound (a) contains a polytetramethylene glycol, the terminal (meth)acrylating agent (c) contains a (meth)acrylate compound containing a functional group reactive with a functional group contained in the chain extender or contains a (meth)acrylate compound containing a functional group reactive with a hydroxy group, and the viscosity at 25°C is 10 Pa·s or more and 300 Pa·s or less. Solution to Problem

The inventors have conducted intensive studies in order to solve the above problems and have found that the above problems can be solved by using a specific polytetramethylene glycol-based (meth)acrylate compound. This finding has led to the completion of the present invention.

That is, the present invention provides the following polytetramethylene glycol-based (meth)acrylate compound, cured product, and composition.

### [Item 1]

A polytetramethylene glycol-based (meth)acrylate compound containing a terminal (meth)acrylate group,
in which the polytetramethylene glycol-based (meth)acrylate compound containing the terminal (meth)acrylate group is obtained by reaction of at least a polyol compound (a), a chain extender (b), and a terminal (meth)acrylating agent (c),
the polyol compound (a) contains a polytetramethylene glycol,
the terminal (meth)acrylating agent (c) contains a (meth)acrylate compound containing a functional group reactive with a functional group contained in the chain extender or contains a (meth)acrylate compound containing a functional group reactive with a hydroxy group, and
the viscosity at 25°C is 10 Pa·s or more and 300 Pa·s or less.

### [Item 2]

The polytetramethylene glycol-based (meth)acrylate compound containing the terminal (meth)acrylate group described in item 1, in which the polytetramethylene glycol-based (meth)acrylate compound containing the terminal (meth)acrylate group is obtained by reaction of the terminal (meth)acrylating agent (c) and a polytetramethylene glycol-based prepolymer that is obtained by reaction of at least the polyol compound (a) and the chain extender (b), and in which the amount of urethane linkages in the polytetramethylene glycol-based prepolymer is 0 mmol/g or more and 0.43 mmol/g or less.

### [Item 3]

The polytetramethylene glycol-based (meth)acrylate compound described in item 1 or 2, in which the chain extender (b) is one or more types selected from the group consisting of the following (i) to (iv):
(i) aliphatic polyisocyanate compounds;
(ii) alicyclic polyisocyanate compounds;
(iii) biuret forms, isocyanurate forms, adduct forms, allophanate forms, carbodiimide forms, or polymeric forms of aliphatic polyisocyanate compounds; and
(iv) biuret forms, isocyanurate forms, adduct forms, allophanate forms, carbodiimide forms, or polymeric forms of alicyclic polyisocyanate compounds.

### [Item 4]

A cured product of the polytetramethylene glycol-based (meth)acrylate compound described in any one of items 1 to 3.

### [Item 5]

A composition containing the polytetramethylene glycol-based (meth)acrylate compound described in any one of items 1 to 3.

### [Item 6]

A cured product of the composition described in item 5. Advantageous Effects of Invention

According to the present invention, provided is a (meth)acrylate group-containing polymer that does not increase the viscosity of the polymer or solidify even when the molecular weight is increased or the amount of urethane linkages in the polymer backbone is increased.

According to the present invention, a polytetramethylene glycol-based (meth)acrylate compound containing a terminal (meth)acrylate group is provided in which the polytetramethylene glycol-based (meth)acrylate compound containing the terminal (meth)acrylate group is obtained by reaction of at least a polyol compound (a), a chain extender (b), and a terminal (meth)acrylating agent (c), the polyol compound (a) contains a polytetramethylene glycol, the terminal (meth)acrylating agent (c) contains a (meth)acrylate compound containing a functional group reactive with a functional group contained in the chain extender or contains a (meth)acrylate compound containing a functional group reactive with a hydroxy group, and the viscosity at 25°C is 10 Pa·s or more and 300 Pa·s or less. Description of Embodiments

The following describes:
(A) a polytetramethylene glycol-based (meth)acrylate compound,
(B) a cured product of a polytetramethylene glycol-based (meth)acrylate compound,
(C) a composition containing a polytetramethylene glycol-based (meth)acrylate compound, and
(D) a cured product of a composition containing a polytetramethylene glycol-based (meth)acrylate compound.

In the present application, the term "(meth)acryl" refers to both "acryl" and "methacryl", the term "(meth)acrylate" refers to both "acrylate" and "methacrylate", and the term "(meth)acryloyl group" refers to both "acryloyl group" and "methacryloyl group".

### [Polytetramethylene Glycol-Based (Meth)acrylate Compound]

The polytetramethylene glycol-based (meth)acrylate compound of the present invention is a polytetramethylene glycol-based (meth)acrylate compound containing a terminal (meth)acrylate group, in which the polytetramethylene glycol-based (meth)acrylate compound containing the terminal (meth)acrylate group is obtained by reaction of at least a polyol compound (a), a chain extender (b), and a terminal (meth)acrylating agent (c), the polyol compound (a) contains a polytetramethylene glycol, and the terminal (meth)acrylating agent (c) contains a (meth)acrylate compound containing a functional group reactive with a functional group contained in the chain extender or contains a (meth)acrylate compound containing a functional group reactive with a hydroxy group.

### <Polyol Compound (a)>

The polyol compound (a) contains a polytetramethylene glycol, and may contain another polyol in addition to the polytetramethylene glycol.

### (Polytetramethylene Glycol)

The polytetramethylene glycol is a compound represented by the following formula (1):

HO-(CH₂CH₂CH₂CH₂O)n-H (1)

(wherein in formula (1), n is the number of repeating units.). For example, commercially available compounds from Mitsubishi Chemical Corporation, BASF, and so forth can be used.

The number-average molecular weight of the polytetramethylene glycol is not particularly limited. For example, it is 500 or more, preferably 1,000 or more, more preferably 1,500 or more, and for example, it is 10,000 or less, preferably 7,000 or less, more preferably 5,000 or less, and even more preferably 3,500 or less.

### (Another Polyol)

Another polyol, other than the polytetramethylene glycol, that may be contained in the polyol compound (a) is not particularly limited as long as it is a polyol containing two or more hydroxy groups. Examples of the other polyols include one or more types selected from the group consisting of: aliphatic polyols, such as ethylene glycol, 1,2-propanediol, 1,3-propanediol, 1,2-butanediol, 1,3-butanediol, 1,4-butanediol, 1,2-pentanediol, 1,3-pentanediol, 1,4-pentanediol, 1,5-pentanediol, 1,6-hexanediol, 1,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 3-methyl-1,5-pentanediol, 2-ethyl-1,6-hexanediol, 2-methyl-1,3-pentanediol, 2-methyl-1,8-octanediol, 1-methyl-1,8-octanediol, glycerol, trimethylolpropane, and pentaerythritol; alicyclic polyols, such as 1,3-cyclohexanediol, 1,4-cyclohexanediol, 1,3,5-cyclohexanetriol, 1,4-cyclohexanedimethanol, 1,2-cyclopentanediol, 1,3-cyclopentanediol, 1,1-cyclohexanedimethanol, 1,2-cyclohexanedimethanol, 1,3-cyclohexanedimethanol, 1,2-cyclooctanediol, 1,5-cyclooctanediol, 5-norbornene-2,2-dimethanol, 5-norbornene-2,3-dimethanol, norbornane-2,3-dimethanol, norbornane-2,5-dimethanol, 2,6-decahydronaphthalenedimethanol, 1,3-adamantanediol, 1,4-adamantanediol, 2,4-adamantanediol, tricyclodecanedimethanol, and hydrogenated bisphenol A; polyalkylene glycols, such as diethylene glycol, dipropylene glycol, tripropylene glycol, and triethylene glycol; and polymeric polyols, such as polycarbonate polyols, polyether polyols, polyester polyols, polyurethane polyols, and polyolefin polyols, in which the polymeric polyols have a number-average molecular weight of 300 or more and 10,000 or less.

The amount of the other polyol is, for example, 90% or less by mass, preferably 70% or less by mass, more preferably 50% or less by mass, and even more preferably 20% or less by mass, when the total amount of the polyol compound (a) is 100% by mass. The other polyols need not be used.

### <Chain Extender (b)>

The chain extender (b) is not particularly limited as long as it is a compound that can react with the polyol compound (a) to form an oligomer and extend the molecular chain. The chain extender (b) is a compound having a functional group reactive with a hydroxy group of the polyol, and examples thereof include one or more types selected from the group consisting of polyisocyanate compounds, polyhalogen compounds, polycarboxylic acid compounds, and so forth. Among these, the compound is preferably one or more types selected from the group consisting of polyisocyanate compounds and polyhalogen compounds. In the case of reaction with a polyhalogen compound, it is preferable to convert the hydroxy groups of the polyol compound into metal alkoxides and then allow them to react with the chain extender.

The amount of the chain extender (b) can be adjusted appropriately depending on the molecular weight of the polytetramethylene glycol-based (meth)acrylate compound, and is not particularly limited. For example, it is 0.6 mol or less, preferably 0.5 mol or less, and more preferably 0.4 mol or less, based on 1.0 mol of the polyol compound (a). Alternatively, it is 1.6 mol or more, preferably 2.0 mol or more, and more preferably 2.5 mol or more.

When a polyisocyanate compound is used as the chain extender (b), the amount of the chain extender (b) is preferably 0.6 mol or less, more preferably 0.5 mol or less, and even more preferably 0.4 mol or less, based on 1 mol of the polyol compound (a). This makes it possible to reduce the amount of urethane linkages based on the molecular weight of the oligomer obtained from the polyol compound (a) and a polyisocyanate compound, and further to reduce the amount of urethane linkages based on the molecular weight of the polytetramethylene glycol-based (meth)acrylate compound.

### (Polyisocyanate Compound)

The polyisocyanate compound is not particularly limited as long as it is a compound containing two or more isocyanate groups.

Examples thereof include one or more types selected from the group consisting of aliphatic polyisocyanate compounds, such as 1,6-hexamethylene diisocyanate, 2,2,4-trimethylhexamethylene diisocyanate, 2,4,4-trimethylhexamethylene diisocyanate, 1,4-hexamethylene diisocyanate, 1,5-pentamethylene diisocyanate, 2-methyl-1,5-pentyl diisocyanate, 3-methyl-1,5-pentyl diisocyanate, methylene diisocyanate, 1,2-dimethylene diisocyanate, 1,3-trimethylene diisocyanate, 1,18-octadecylene diisocyanate, 1,4-tetramethylene diisocyanate, 1,10-decamethylene diisocyanate, bis(2-isocyanatoethyl) fumarate, lysine diisocyanate (hexanoic acid-2,6-diisocyanate), 1,6,11-undecane triisocyanate, 1,8-diisocyanato-4-isocyanatomethyloctane, and 1,3,6-hexamethylene triisocyanate; aromatic polyisocyanate compounds, such as 2,4-tolylene diisocyanate, 2,6-tolylene diisocyanate, 4,4'-diphenylmethane diisocyanate, 2,2'-diphenylmethane diisocyanate, 2,4-diphenylmethane diisocyanate, 3,3'-dimethyl-4,4'-diphenylmethane diisocyanate, polymethylene polyphenyl polyisocyanate, 4,4'-diphenyl ether diisocyanate, 2,4'-diphenyl ether diisocyanate, 4,4'-biphenylene diisocyanate, 3,3'-dimethyl-4,4'-biphenylene diisocyanate, 2,6-dimethyl-4,4'-biphenylene diisocyanate, 3,3'-dimethoxy-4,4'-biphenylene diisocyanate, o-xylylene diisocyanate, m-xylylene diisocyanate, p-xylylene diisocyanate, tetramethylxylylene diisocyanate, 1,5-naphthalene diisocyanate, dianisidine diisocyanate, o-phenyl diisocyanate, m-phenyl diisocyanate, p-phenyl diisocyanate, halogenated phenyl diisocyanates, cumene-2,4-diisocyanate, 4-methoxy-1,3-phenylene diisocyanate, 4-ethoxy-1,3-phenylene diisocyanate, 5,6-dimethyl-1,3-phenylene diisocyanate, benzidine diisocyanate, 1,4-anthracene diisocyanate, 9,10-anthracene diisocyanate, and 4,4'-diisocyanatobenzyl; alicyclic polyisocyanate compounds, such as methylcyclohexane-2,4-diisocyanate, methylcyclohexane-2,6-diisocyanate, 1,4-(isocyanatomethyl)cyclohexane, 1,3-(isocyanatomethyl)cyclohexane, 1,2-(isocyanatomethyl)cyclohexane, isophorone diisocyanate, dimer acid diisocyanate, bicycloheptane triisocyanate, 4,4'-dicyclohexylmethane diisocyanate, norbornyl diisocyanate, norbornene methane diisocyanate, 1,4-cyclohexane diisocyanate, 1,3-cyclohexane diisocyanate, and hydrogenated derivatives of the aforementioned aromatic diisocyanates; and
polyisocyanate derivatives, such as biuret forms, isocyanurate forms, adduct forms, allophanate forms, carbodiimide forms, and polymeric forms of these polyisocyanates.

Among these, one or more types selected from the group consisting of the following (i) to (iv) are preferably exemplified:
(i) aliphatic polyisocyanate compounds;
(ii) alicyclic polyisocyanate compounds;
(iii) aliphatic polyisocyanate derivatives that are biuret forms, isocyanurate forms, adduct forms, allophanate forms, carbodiimide forms, or polymeric forms of aliphatic polyisocyanate compounds; and
(iv) alicyclic polyisocyanate derivatives that are biuret forms, isocyanurate forms, adduct forms, allophanate forms, carbodiimide forms, or polymeric forms of alicyclic polyisocyanate compounds. More preferably, it is one or more types selected from the group consisting of 1,6-hexamethylene diisocyanate, 2,2,4-trimethylhexamethylene diisocyanate, 2,4,4-trimethylhexamethylene diisocyanate, 1,5-pentamethylene diisocyanate, 2-methyl-1,5-pentyl diisocyanate, 3-methyl-1,5-pentyl diisocyanate, 1,4-tetramethylene diisocyanate, lysine diisocyanate (hexanoic acid-2,6-diisocyanate), methylcyclohexane-2,4-diisocyanate, methylcyclohexane-2,6-diisocyanate, 1,4-(isocyanatomethyl)cyclohexane, 1,3-(isocyanatomethyl)cyclohexane, 1,2-(isocyanatomethyl)cyclohexane, isophorone diisocyanate, 4,4'-dicyclohexylmethane diisocyanate, and biuret forms, isocyanurate forms, adduct forms, allophanate forms, carbodiimide forms, and polymeric forms of these polyisocyanate compounds; and still more preferably, it is one or more types selected from the group consisting of 1,6-hexamethylene diisocyanate, 2,2,4-trimethylhexamethylene diisocyanate, 2,4,4-trimethylhexamethylene diisocyanate, 1,5-pentamethylene diisocyanate, 1,4-tetramethylene diisocyanate, 1,4-(isocyanatomethyl)cyclohexane, 1,3-(isocyanatomethyl)cyclohexane, isophorone diisocyanate, 4,4'-dicyclohexylmethane diisocyanate, and biuret forms, isocyanurate forms, adduct forms, allophanate forms, carbodiimide forms, and polymeric forms of these polyisocyanate compounds.

As these polyisocyanate compounds, various commercially available products can be used. For example, one or more types selected from the group consisting of the Duranate series (for example, D101, D101, A201, and so forth, manufactured by Asahi Kasei Corp.), the Stabio series (manufactured by Mitsui Chemicals, Inc.), the Tolonate series (for example, X FLO 100, HDT, IDT 70 B, HDB-LV, and so forth; manufactured by Vencorex), and the Fortimo series (manufactured by Mitsui Chemicals, Inc.) may be used. For example, since some of the Stabio series and the Tolonate series are bio-based isocyanates, the use thereof makes it possible to increase the biomass degree of polytetramethylene glycol-based (meth)acrylate compounds.

### (Polyhalogen Compound)

The polyhalogen compound is not particularly limited as long as it is a compound containing two or more halogen groups reactive with functional groups, such as hydroxy groups. For example, one or more types selected from the group consisting of aliphatic polyhalogen compounds, aromatic polyhalogen compounds, polyhalogenated ether compounds, polyhalogenated ketone compounds, and so forth are exemplified.

Examples thereof include one or more types selected from the group consisting of, for example, aliphatic polyhalogen compounds, such as methylene chloride, methylene bromide, methylene iodide, monobromomonochloromethane, 1,1-dichloroethane, 1,2-dichloroethane, 1,1-bromoethane, 1,2-dibromoethane, 1,4-dibromobutane, and 1,6-dibromohexane; aromatic polyhalogen compounds, such as benzyl chloride, benzyl bromide, and bis(chloromethyl)benzene; polyhalogenated ether compounds, such as bis(chloromethyl) ether, bis(bromomethyl) ether, 2,2'-dichloroethyl ether, 2,2'-dibromoethyl ether, 4,4'-bis(chloromethyl)diphenyl ether, 4,4'-bis(bromomethyl)diphenyl ether, bis(chloromethoxy)benzene, bis(bromomethoxy)benzene, tris(chloromethoxy)benzene, and tris(bromomethoxy)benzene; and
polyhalogenated ketone compounds, such as dibis(chloromethyl) ketone, dibis(bromomethyl) ketone, 4,4'-dichloromethylbenzophenone, and 4,4'-dibromomethylbenzophenone.

Among these, preferably, one or more types selected from the group consisting of aliphatic polyhalogen compounds, aromatic polyhalogen compounds, and polyhalogenated ether compounds are mentioned. One or more types of aliphatic dihalogen compounds are more preferred, and one or more types selected from the group consisting of methylene chloride, methylene bromide, methylene iodide, bromochloromethane, dichloroethane, dibromoethane, and diiodoethane are still more preferred.

### (Polycarboxylic Acid Compound)

The polycarboxylic acid compound is not particularly limited as long as it is one or more types selected from the group consisting of compounds containing two or more carboxy groups reactive with functional groups, such as hydroxy groups, acid halides thereof, acid anhydrides thereof, and alkyl esters thereof having 1 to 6 carbon atoms. For example, one or more types selected from the group consisting of aliphatic polycarboxylic acid compounds, aromatic polycarboxylic acid compounds, alicyclic polycarboxylic acid compounds, acid halides thereof, acid anhydrides thereof, and alkyl esters thereof having 1 to 6 carbon atoms are mentioned.

Examples of compounds containing two or more carboxy groups reactive with functional groups, such as hydroxy groups, include one or more types selected from the group consisting of, for example, aliphatic polycarboxylic acid compounds, such as oxalic acid, succinic acid, glutaric acid, adipic acid, suberic acid, azelaic acid, sebacic acid, 1,9-nonanedicarboxylic acid, 1,10-decanedicarboxylic acid, 1,12-dodecanedicarboxylic acid, 1,14-tetradecanedicarboxylic acid, 1,18-octadecanedicarboxylic acid, acid anhydrides thereof, and alkyl esters thereof having 1 to 6 carbon atoms;
aromatic polycarboxylic acid compounds, such as phthalic acid, isophthalic acid, terephthalic acid, naphthalene-2,6-dicarboxylic acid, trimellitic acid, 1,2,3-benzenetricarboxylic acid, 1,2,4-naphthalenetricarboxylic acid pyromellitic acid, acid anhydrides thereof, and alkyl esters thereof having 1 to 6 carbon atoms; and alicyclic polycarboxylic acid compounds, such as 1,2-cyclohexanedicarboxylic acid, 1,3-cyclohexanedicarboxylic acid, 1,4-cyclohexanedicarboxylic acid, 4,4'-dicyclohexylmethanedicarboxylic acid, isobornyldicarboxylic acid, acid anhydrides thereof, and alkyl esters thereof having 1 to 6 carbon atoms.

### <Terminal (Meth)acrylating Agent (c)>

The terminal (meth)acrylating agent (c) is a component that introduces a (meth)acryloyl group into a terminal of a polytetramethylene glycol-based prepolymer, which is a reaction product of the polytetramethylene glycol-containing polyol compound (a) and the chain extender (b).

The terminal (meth)acrylating agent (c) contains a (meth)acrylate compound containing a functional group reactive with a functional group contained in the chain extender, or a (meth)acrylate compound containing a functional group reactive with a hydroxy group.

The (meth)acrylate compound containing a functional group reactive with a functional group contained in the chain extender is not particularly limited as long as it is a (meth)acrylate compound containing a functional group reactive with a functional group derived from the chain extender and present at a terminal of a polytetramethylene glycol-based prepolymer, which is a reaction product obtained by reaction of the polytetramethylene glycol-containing polyol compound (a) and the chain extender (b) in the presence of an excess of the chain extender (b).

For example, when the chain extender is a polyisocyanate compound, examples of the (meth)acrylate compound containing a functional group reactive with a functional group contained in the chain extender include one or more types selected from the group consisting of active hydrogen-containing (meth)acrylate compounds, such as hydroxy group-containing (meth)acrylate compounds, carboxy group-containing (meth)acrylate compounds, mercapto group-containing (meth)acrylate compounds, primary amino group-containing (meth)acrylate compounds, and secondary amino group-containing (meth)acrylate compounds, and isocyanate group-containing (meth)acrylate compounds.

For example, when the chain extender is a polyhalogen compound, examples of the (meth)acrylate compound containing a functional group reactive with a functional group contained in the chain extender include one or more types selected from the group consisting of hydroxy group-containing (meth)acrylate compounds, carboxy group-containing (meth)acrylate compounds, and mercapto group-containing (meth)acrylate compounds.

For example, when the chain extender is a polycarboxylic acid compound, examples of the (meth)acrylate compound containing a functional group reactive with a functional group contained in the chain extender include one or more types selected from the group consisting of hydroxy group-containing (meth)acrylate compounds, isocyanate group-containing (meth)acrylate compounds, and mercapto group-containing (meth)acrylate compounds.

As the (meth)acrylate compound having a functional group capable of reacting with the functional group of the chain extender, a hydroxyl group-containing (meth)acrylate compound is preferably used.

The (meth)acrylate compound containing a functional group reactive with a hydroxy group is not particularly limited as long as it is a (meth)acrylate compound containing a functional group reactive with a hydroxy group derived from the polyol compound present at a terminal of a polytetramethylene glycol-based prepolymer, which is a reaction product obtained by reaction of the polytetramethylene glycol-containing polyol compound (a) and the chain extender (b) in the presence of an excess of the chain extender (b). For example, one or more types selected from the group consisting of, for example, isocyanate group-containing (meth)acrylate compounds, carboxy group-containing (meth)acrylate compounds, acid halide group (-COX group (X is a halogen): haloformyl group)-containing (meth)acrylate compounds, and acid anhydride group-containing (meth)acrylate compounds are mentioned.

The amount of the terminal (meth)acrylating agent (c) is not particularly limited as long as it is an amount sufficient to introduce a (meth)acrylate group into a terminal of the prepolymer, which is a reaction product of the polytetramethylene glycol-containing polyol compound (a) and the chain extender (b). When the amount in moles of terminal functional groups of the prepolymer obtained by reaction of the polytetramethylene glycol-containing polyol compound (a) and the chain extender (b) is defined as X mol, the amount can be, for example, 0.3X mol or more, preferably 0.5X mol or more, and more preferably 1.0X mol or more, and can be, for example, 3.0X mol or less, preferably 2.5X mol or less, and more preferably 2.2X mol or less.

### (Hydroxy Group-Containing (Meth)acrylate Compound)

The hydroxy group-containing (meth)acrylate compound is a terminal (meth)acrylating agent used when the polytetramethylene glycol-based prepolymer, which is a reaction product of the polytetramethylene glycol-containing polyol compound (a) and the chain extender (b), has a terminal group, such as an isocyanate group, a halogen group, a carboxy group, or an acid anhydride group, reactive with a hydroxy group.

The hydroxy group-containing (meth)acrylate compound is not particularly limited as long as it is a compound containing one or more hydroxy groups and one or more (meth)acryloyl groups in its molecule.

Examples thereof include one or more types selected from the group consisting of, for example, hydroxyalkyl (meth)acrylates, such as 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth)acrylate, and 6-hydroxyhexyl (meth)acrylate;
dihydroxyalkyl (meth)acrylates, such as 2,3-dihydroxypropyl (meth)acrylate, 3,4-dihydroxybutyl (meth)acrylate, glycerol mono(meth)acrylate, and 1,4-dihydroxyheptyl (meth)acrylate; hydroxycycloalkyl mono(meth)acrylates, such as 1,4-cyclohexanedimethanol mono(meth)acrylate and 3-hydroxy-1-methacryloyloxyadamantane;
polyalkylene glycol mono(meth)acrylates, such as polyethylene glycol mono(meth)acrylate, polypropylene glycol mono(meth)acrylate, and polybutylene glycol (meth)acrylate; erythritol (meth)acrylates, such as erythritol di(meth)acrylate and erythritol tri(meth)acrylate; pentaerythritol (meth)acrylates, such as pentaerythritol mono(meth)acrylate, pentaerythritol di(meth)acrylate, and pentaerythritol tri(meth)acrylate;
dipentaerythritol (meth)acrylates, such as dipentaerythritol mono(meth)acrylate, dipentaerythritol di(meth)acrylate, dipentaerythritol tri(meth)acrylate, dipentaerythritol tetra(meth)acrylate, and dipentaerythritol penta(meth)acrylate;
tripentaerythritol (meth)acrylates, such as tripentaerythritol tetra(meth)acrylate, tripentaerythritol penta(meth)acrylate, tripentaerythritol hexa(meth)acrylate, and tripentaerythritol hepta(meth)acrylate; and reaction products of (meth)acrylate compounds containing a functional group reactive with a hydroxy group and polyol compounds. Among these, one or more types selected from the group consisting of hydroxyalkyl (meth)acrylates and pentaerythritol (meth)acrylates are preferred because the cured products exhibit excellent properties.

The amount used when the hydroxy group-containing (meth)acrylate compound is used as the terminal (meth)acrylating agent (c) is not particularly limited. From the viewpoint of properties of the cured product and the like, the amount is, for example, 0.3 mol or more, preferably 0.5 mol or more, more preferably 0.95 mol or more, and even more preferably 0.99 mol or more, and, for example, 1.5 mol or less, preferably 1.25 mol or less, and more preferably 1.1 mmol or less, based on 1 mol of a group (for example, an isocyanate group, a halogen group, a carboxy group, or an acid anhydride group) reactive with a hydroxy group contained in the prepolymer, which is a reaction product of the polytetramethylene glycol-containing polyol compound (a) and the chain extender (b).

### (Isocyanate Group-Containing (Meth)acrylate Compound)

The isocyanate group-containing (meth)acrylate compound is a terminal (meth)acrylating agent used when a terminal of the polytetramethylene glycol-based prepolymer, which is a reaction product of the polytetramethylene glycol-containing polyol compound (a) and the chain extender (b), is an active hydrogen-containing group, such as a hydroxy group, which is a group reactive with an isocyanate group.

The isocyanate group-containing (meth)acrylate compound is not particularly limited as long as it is a compound containing one or more isocyanate groups or blocked isocyanate groups and one or more (meth)acryloyl groups in its molecule.

Examples thereof include one or more types selected from the group consisting of, for example, 2-isocyanatoethyl (meth)acrylate, 3-isocyanatopropyl (meth)acrylate, 2-isocyanato-1-methylethyl (meth)acrylate, 2-isocyanato-1,1-dimethylethyl (meth)acrylate, 5-(meth)acryloyloxy-3-hydroxypentyl isocyanate, 4-isocyanatocyclohexyl (meth)acrylate, 2-(2-isocyanatoethoxy)ethyl (meth)acrylate, 1,1-bis((meth)acryloyloxymethyl)ethyl isocyanate, 2-(2-(meth)acryloyloxyethyloxy)ethyl isocyanate, reaction products of the above-described hydroxy group-containing (meth)acrylate groups and polyol compounds, compounds in which the isocyanate groups of these compounds are masked with blocking agents, 2-[(3,5-dimethylpyrazolyl)carbonylamino]ethyl (meth)acrylate, and 2-(0-[1'-methylpropylideneamino]carboxyamino)ethyl (meth)acrylate.

The amount used when the (blocked) isocyanate group-containing (meth)acrylate compound is used as the terminal (meth)acrylating agent (c) is not particularly limited. From the viewpoint of properties of the cured product and the like, the amount is, for example, 0.3 mol or more, preferably 0.5 mol or more, and more preferably 1.0 mol or more, and, for example, 3.0 mol or less, preferably 2.5 mol or less, and more preferably 2.2 mmol or less, based on 1 mol of a hydroxy group contained in the prepolymer, which is a reaction product of the polytetramethylene glycol-containing polyol compound (a) and the chain extender (b).

### (Carboxy Group-Containing (Meth)acrylate Compound)

The carboxy group-containing (meth)acrylate compound is not particularly limited as long as it is a compound containing one or more carboxy groups and one or more (meth)acryloyl groups in its molecule.

Examples thereof include one or more types selected from the group consisting of, for example, unsaturated monocarboxylic acids, such as acrylic acid, methacrylic acid, carboxyethyl (meth)acrylate, carboxypentyl (meth)acrylate, ethylsuccinic (meth)acrylate, ethylhexahydrophthalic (meth)acrylate, ethylphthalic (meth)acrylate, propylsuccinic (meth)acrylate, propylhexahydrophthalic (meth)acrylate, propylphthalic (meth)acrylate, ethyltetrahydrophthalic (meth)acrylate, propyltetrahydrophthalic (meth)acrylate, and crotonic acid; unsaturated dicarboxylic acids, such as fumaric acid, maleic acid, and itaconic acid; butenedioic acid mono-straight-chain alkyl esters, such as monomethyl fumarate, monoethyl fumarate, mono-n-butyl fumarate, monomethyl maleate, monoethyl maleate, mono-2-ethylhexyl maleate, and mono-n-butyl maleate; butenedioic acid monocyclic alkyl esters, such as monocyclopentyl fumarate, monocyclohexyl fumarate, monocyclopentyl maleate, and monocyclohexyl maleate; and itaconic acid monoesters, such as monomethyl itaconate, monoethyl itaconate, mono-n-butyl itaconate, and monocyclohexyl itaconate.

Among these, from the viewpoint of excellent reactivity and availability, unsaturated monocarboxylic acids, such as acrylic acid, methacrylic acid, and carboxyethyl (meth)acrylate, are preferred.

### (Acid Halide Group (-COX Group: Haloformyl Group)-Containing (Meth)acrylate Compound)

The acid halide group (-COX group: haloformyl group)-containing (meth)acrylate compound is not particularly limited as long as it is a compound containing one or more acid halide groups (-COX groups: haloformyl groups) and one or more (meth)acryloyl groups in its molecule. In the -COX group, X is a halogen.

Examples thereof include one or more types selected from the group consisting of (meth)acrylate compounds in which the carboxy groups of the above-described carboxy group-containing (meth)acrylate compounds are converted into acid halide groups (-COX groups: haloformyl groups).

### (Acid Anhydride Group-Containing (Meth)acrylate Compound)

The acid anhydride group-containing (meth)acrylate compound is not particularly limited as long as it is a compound containing one or more acid halide groups (-COX groups: haloformyl groups) and one or more (meth)acryloyl groups in its molecule.

Examples thereof include one or more types selected from maleic anhydride and citraconic anhydride.

### <Physical Properties>

The viscosity of the poly(meth)acrylate compounds of the poly(tetramethylene glycol) system is described below.

The amount of urethane linkages in the prepolymer obtained from the polyol compound (a) and the chain extender (b) constituting the polytetramethylene glycol-based (meth)acrylate compound, and the number-average molecular weight and weight-average molecular weight of the polytetramethylene glycol-based (meth)acrylate compound, can each be as described below.

The elastic modulus and maximum point stress of the cured product of the polytetramethylene glycol-based (meth)acrylate compound can each be specified as described below.

### (Viscosity)

The viscosity of the polytetramethylene glycol-based (meth)acrylate compound according to the present invention at 25°C is 10 Pa·s or more and 300 Pa·s or less. The lower limit of the viscosity is preferably 15 Pa·s or more, more preferably 25 Pa·s or more, and even more preferably 30 Pa·s or more. The upper limit of the viscosity is preferably 200 Pa·s or less, more preferably 150 Pa·s or less, and even more preferably 100 Pa·s or less. When the viscosity at 25°C is outside the range of 10 Pa·s to 300 Pa·s, the handleability of the polytetramethylene glycol-based (meth)acrylate compound may decrease.

The viscosity of the polytetramethylene glycol-based (meth)acrylate compound at 25°C was measured by a method described in examples.

The viscosity at 25°C of the polytetramethylene glycol-based (meth)acrylate compound according to the present invention can be adjusted to a predetermined range by adjusting, for example,
(i) the molecular weight of polytetramethylene glycol contained in the polyol compound (a), (ii) the molecular weight of the polytetramethylene glycol-based (meth)acrylate compound, and (iii) the amount of urethane linkages in the prepolymer obtained from the polyol compound (a) and the chain extender (b) that constitute the polytetramethylene glycol-based (meth)acrylate compound.

### (Number-Average Molecular Weight)

The number-average molecular weight of the polytetramethylene glycol-based (meth)acrylate compound according to the present invention is not particularly limited. For example, it is 6,000 or more, preferably 7,000 or more, and more preferably 7,500 or more, and for example, 16,000 or less, preferably 15,000 or less, and more preferably 13,000 or less.

The number-average molecular weight of the polytetramethylene glycol-based (meth)acrylate compound is measured by a method described in the examples.

The number-average molecular weight of the polytetramethylene glycol-based (meth)acrylate compound according to the present invention can be adjusted to a predetermined range by adjusting the feed ratio by mole of the polyol compound (a) to the chain extender (b), the reaction time, the reaction temperature, and the like.

### (Weight-Average Molecular Weight)

The weight-average molecular weight of the polytetramethylene glycol-based (meth)acrylate compound according to the present invention is not particularly limited. It is, for example, 10,000 or more, preferably 11,000 or more, and more preferably 15,000 or more, and for example, 30,000 or less, preferably 28,000 or less, and more preferably 26,000 or less.

The weight-average molecular weight of the polytetramethylene glycol-based (meth)acrylate compound is measured by a method described in the examples.

The weight molecular weight of the polytetramethylene glycol-based (meth)acrylate compound according to the present invention can be adjusted to a predetermined range by adjusting the feed ratio by mole of the polyol compound (a) to the chain extender (b), the reaction time, the reaction temperature, and the like.

### (Amount of Urethane Linkages)

In the polytetramethylene glycol-based (meth)acrylate compound according to the present invention, the amount of urethane linkages in the polytetramethylene glycol-based prepolymer, which is the reaction product of the polytetramethylene glycol-containing polyol compound (a) and the chain extender (b), is not particularly limited. It is, for example, 0.430 mmol/g or less, preferably 0.360 mmol/g or less, and more 0.340 mmol/g or less.

In the polytetramethylene glycol-based (meth)acrylate compound of the present invention, the prepolymer, which is the reaction product of the polytetramethylene glycol-containing polyol compound (a) and the chain extender (b), preferably has urethane linkages in terms of the properties of the cured product, particularly the mechanical properties, such as the elastic modulus and maximum point stress, of the cured product. When the prepolymer, which is the reaction product of the polytetramethylene glycol-containing polyol compound (a) and the chain extender (b), has a urethane linkage, the lower limit of the amount of urethane linkages can be, for example, more than 0 mmol/g, preferably 0.100 mmol/g or more.

In the polytetramethylene glycol-based (meth)acrylate compound according to the present invention, the amount of urethane linkages in the prepolymer, which is the reaction product of the polytetramethylene glycol-containing polyol compound (a) and the chain extender (b), can be calculated by a method described in the examples.

In the polytetramethylene glycol-based (meth)acrylate compound according to the present invention, the amount of urethane linkages in the prepolymer, which is the reaction product of the polytetramethylene glycol-containing polyol compound (a) and the chain extender (b), can be adjusted to a predetermined range by adjusting the type of chain extender (b), the feed ratio by mole of the polyol compound (a) to the chain extender (b), the reaction time, the reaction temperature, and so forth.

### <Production Method>

A method for producing the polytetramethylene glycol-based (meth)acrylate compound is not particularly limited.

Examples thereof include:
(i) a method in which the polytetramethylene glycol-containing polyol compound (a) is allowed to react with the chain extender (b) at a ratio by mole in which the polyol compound (a) is in excess to form an oligomer, and then allowed to react with a (meth)acrylate compound, serving as the terminal (meth)acrylating agent (c), containing a functional group reactive with a hydroxy group;
(ii) a method in which the polytetramethylene glycol-containing polyol compound (a) is allowed to react with the chain extender (b) at a ratio by mole in which the chain extender (b) is in excess to form an oligomer, and then allowed to react with a (meth)acrylate compound, serving as the terminal (meth)acrylating agent (c), containing a functional group reactive with a functional group contained in the chain extender; and
(iii) a method in which the polytetramethylene glycol-containing polyol compound (a), the chain extender (b), and the terminal (meth)acrylating agent (c) are charged together and are allowed to react together.

In the present invention, the above method (i) or (ii) is preferably used.

Regarding the reaction ratio of the polyol compound (a), the chain extender (b), and the terminal (meth)acrylating agent (c), when the total number of moles of hydroxy groups of the polyol compound (a) and the terminal (meth)acrylating agent (c) is defined as 1 mol, the total number of moles of reactive groups of the chain extender (b) (isocyanate groups, halogen groups, carboxy groups, and so forth) and isocyanate groups of the terminal (meth)acrylating agent (c) is, for example, 0.8 mol or more, preferably 0.9 mol or more, and 0.95 mol or more, and, for example, 1.2 mol, preferably 1.1 mol, and more preferably 1.05 mol.

There are no specific limitations on the production conditions for the polytetramethylene glycol-based (meth)acrylate compound. The reaction temperature is, for example, 40°C or higher, preferably 50°C or higher, and more preferably 60°C or higher, and for example, 100°C or lower, preferably 90°C or lower, and more preferably 80°C or lower. The reaction time is, for example, 1 hour or more, preferably 3 hours or more, and for example, 24 hours or less, preferably 10 hours or less. The pressure is not particularly limited, and an atmosphere at atmospheric pressure without either heating or reduced pressure can be used.

In producing the polytetramethylene glycol-based (meth)acrylate compound, one or more types selected from the group consisting of organic solvents, polymerization catalysts, polymerization inhibitors, antioxidants, and so forth can be used as needed.

Examples of the organic solvent include one or more types selected from the group consisting of, for example, aromatic hydrocarbon-based solvents, such as benzene, toluene, ethylbenzene, n-propylbenzene, t-butylbenzene, o-xylene, m-xylene, p-xylene, tetralin, decalin, and aromatic naphtha; aliphatic hydrocarbon-based solvents, such as n-hexane, n-heptane, n-octane, isooctane, and n-decane; alicyclic hydrocarbon-based solvents, such as cyclohexane; alcohol-based solvents, such as isopropyl alcohol, isobutyl alcohol, s-butyl alcohol, and t-butyl alcohol; ether-based solvents, such as dimethyl ether, diethyl ether, ethylene glycol dimethyl ether, ethylene glycol diethyl ether, dipropylene glycol dimethyl ether, dipropylene glycol diethyl ether, triethylene glycol dimethyl ether, triethylene glycol diethyl ether, tetrahydrofuran, and dioxane; ester-based solvents, such as ethyl acetate, n-butyl acetate, n-amyl acetate, 2-hydroxyethyl acetate, 2-butoxyethyl acetate, 3-methoxybutyl acetate, methyl benzoate, propylene glycol monomethyl ether acetate, propylene glycol monoethyl ether acetate, and dipropylene glycol monomethyl ether acetate; ketone solvents, such as acetone, methyl ethyl ketone, methyl isobutyl ketone, isophorone, cyclohexanone, and methylcyclohexanone; nitrogen-containing solvents, such as dimethylformamide, diethylformamide, dimethylacetamide, and N-methyl-2-pyrrolidone; and sulfur-containing solvents, such as dimethyl sulfoxide. The amount of the organic solvent used is not particularly limited, but can be, for example, 30% or more by mass and 85% or less by mass in terms of reaction concentration.

Examples of the polymerization catalyst include one or more types selected from the group consisting of, for example, nitrogen-containing compounds, such as triethylamine, triethylenediamine, and N-methylmorpholine; metal salts, such as potassium acetate, zinc stearate, and stannous octoate; and organometallic compounds, such as dibutyltin dilaurate. The amount of the catalyst is not particularly limited as long as a sufficient reaction rate can be obtained and the residual amount is small, but is, for example, 0.0005% or more by mass, preferably 0.001% or more by mass, and 0.5% or less by mass, preferably 0.05% or less by mass, based on 100% by mass of the total amount of the polytetramethylene glycol-containing polyol compound (a), the chain extender (b), and the terminal (meth)acrylating agent (c).

The polymerization inhibitor is not particularly limited as long as it is a compound that can inhibit polymerization of the polytetramethylene glycol-based (meth)acrylate compound and the terminal (meth)acrylating agent (c) used in the reaction, as needed, in the production of the polytetramethylene glycol-based (meth)acrylate compound. Examples thereof include one or more types selected from the group consisting of, for example, tertiary butylcatechol, p-methoxyphenol, hydroquinone, tertiary butylhydroquinone, p-benzoquinone, chloranil, m-dinitrobenzene, nitrobenzene, p-phenyldiamine, sulfur, diphenylpicrylhydrazyl, di-p-fluorophenylamine, tri-p-nitrophenylmethyl, 2,4-dimethyl-6-t-butylphenol, 2,6-di-t-butyl-p-cresol, 2,5-dihydroxy-p-benzoquinone, 2,2,6,6-tetramethylpiperidin-1-oxyl, 4-hydroxy-2,2,6,6-tetramethylpiperidin-1-oxyl, and 4-oxo-2,2,6,6-tetramethylpiperidin-1-oxyl.

The amount of the polymerization inhibitor used is not particularly limited. It can be, for example, 0.0001 parts or more by mass, preferably 0.001 parts or more by mass, and for example, 5 parts or less by mass, preferably 2 parts or less by mass, based on 100 parts by mass of the polytetramethylene glycol-based (meth)acrylate compound.

### [Composition Containing Polytetramethylene Glycol-Based (Meth)acrylate Compound]

A composition of the present invention contains the polytetramethylene glycol-based (meth)acrylate compound. The composition of the present invention may contain, as necessary, one or more types selected from the group consisting of polymerization initiators, polymerizable compounds (reactive diluents), and other additives.

### (Polymerization Initiator)

The polymerization initiator is not particularly limited as long as it generates radicals when energy is applied thereto by irradiation with light, such as ultraviolet rays, visible rays, or infrared rays, or by heating, and can initiate polymerization of the (meth)acrylate group in the polytetramethylene glycol-based (meth)acrylate compound. Examples thereof include one or more polymerization initiators selected from the group consisting of, for example, acylphosphine oxide-based, α-hydroxyalkylphenone-based, acetophenone-based, benzoin ether-based, benzyl ketal-based, acid ester-based, α-aminoalkylphenone-based, oxime ester-based, benzophenone-based, thioxanthone-based, titanocene-based, quinone-based, peroxide-based, azo-based, and persulfate-based initiators.

Examples of the polymerization initiator include one or more types selected from the group consisting of, for example, 2,4,6-trimethylbenzoyldiphenylphosphine oxide, bis(2,4,6-trimethylbenzoyl)phenylphosphine oxide, bis(2,6-dimethoxybenzoyl)-2,4,4-trimethylpentylphosphine oxide, 2,4,6-trimethylbenzoylphenylethoxyphosphine oxide, 1-hydroxycyclohexyl phenyl ketone, 1-(4-(phenylthio)-2,2-(O-benzoyloxime))1-hydroxycyclohexylphenyl ketone, 2-hydroxy-2-methyl-1-phenylpropan-1-one, 1-(4-isopropylphenyl)-2-hydroxy-2-methylpropan-1-one, 4-benzoyl-4'-methyl-diphenyl sulfide, 2,2-dimethoxy-1,2-diphenylethan-1-one, 1,2-octanedione, thioxanthone, 2-methylthioxanthone, 2,4-dimethylthioxanthone, 2,4-diethylthioxanthone, 2-isopropylthioxanthone, 2-chlorothioxanthone, 2,4-dichlorothioxanthone, 2-benzyl-2-dimethylamino-1-(4-morpholinophenyl)-butan-1-one, 2-methyl-1-(4-methylthiophenyl)-2-morpholinopropan-1-one, 2,2-dimethoxy-1,2-diphenylethan-1-one, methyl phenylglyoxylate, butylanthraquinone, ethylanthraquinone, phenanthrenequinone, camphorquinone, benzophenone, 4-methylbenzophenone, 4-phenylbenzophenone, benzoylbenzoic acid, hydroxybenzophenone, benzoin, benzoin ethyl ether, benzoin isopropyl ether, benzoin isobutyl ether, benzoin dimethyl ketal, benzoin methyl ether, benzyl dimethyl ketal, acetophenone, α-hydroxyacetophenone, 2,2-diethoxyacetophenone, diethoxyacetophenone, 2-benzyl-2-dimethylamino-1-(4-morpholinophenyl)-butanone, 2,2'-azobis(4-methoxy-2,4-dimethylvaleronitrile), 2,2'-azobis(2,4-dimethylvaleronitrile), 2,2'-azobis-2-methylbutyronitrile, 2,2'-azobis(2-methylpropionitrile), 2,2'-azobis(2-cyclopropylpropionitrile), 2,2'-azobis(methylisobutyrate), 2,4,6-tris(trichloromethyl)-S-triazine, 2-methyl-4,6-bis(trichloro)-S-triazine, 2-(4-methoxyphenyl)-4,6-bis(trichloromethyl)-S-triazine, t-butyl hydroperoxide, cumene hydroperoxide, diacetyl peroxide, dit-butyl peroxide, methyl ethyl ketone peroxide, cyclohexanone peroxide, dicumyl peroxide, dilauroyl peroxide, dibenzoyl peroxide, t-butyl peroxypivalate, t-butyl peroxybenzoate, t-butyl peroxy-2-ethylhexanoate, 1,1-di(t-butylperoxy)cyclohexane, 2,2-bis(t-butylperoxy)butane, 2,2-bis(t-butylperoxy)octane, diisopropyl peroxydicarbonate, t-butyl peroxyisopropyl carbonate, iron-arene complexes, potassium persulfate, sodium persulfate, and ammonium persulfate.

In the composition containing the polytetramethylene glycol-based (meth)acrylate compound of the present invention, the polymerization initiator content is not particularly limited. The content can be appropriately determined in consideration of factors, such as the reaction rate for curing of the composition, the influence of the residual polymerization initiator on the physical properties of the cured product, and the post-treatment of the residual polymerization initiator. When the polymerization initiator is used, the amount used can be, for example, 15.0% or less by mass, preferably 12.0% or less by mass, and more preferably 10.0% or less by mass, based on 100% by mass of the total amount of the composition. The lower limit of the amount used is 0% or more by mass, and, for example, 0.05% or more by mass, preferably 0.1% or more by mass, more preferably 0.5% or more by mass, and even more preferably 1.0% or more by mass.

### (Polymerizable Compound)

The polymerizable compound (reactive diluent) is not particularly limited as long as it can react with the polytetramethylene glycol-based (meth)acrylate compound. The polymerizable compound (reactive diluent) can adjust the viscosity of the composition (reduce the viscosity), and can also adjust the properties of the cured product obtained by curing the composition. As the polymerizable compound (reactive diluent), an ethylenically unsaturated monomer can be used, and among them, a (meth)acryloyl group-containing (meth)acrylate-based compound and a vinyl-based compound containing a vinyl group or an allyl group are preferred.

Examples of the polymerizable compound include one or more types selected from the group consisting of, for example, alkyl (meth)acrylate compounds, such as methyl (meth)acrylate, ethyl (meth)acrylate, n-propyl (meth)acrylate, n-butyl (meth)acrylate, t-butyl (meth)acrylate, isobutyl (meth)acrylate, n-pentyl (meth)acrylate, n-hexyl (meth)acrylate, n-heptyl (meth)acrylate, n-octyl (meth)acrylate, n-lauryl (meth)acrylate, n-stearyl (meth)acrylate, and 2-ethylhexyl (meth)acrylate;
alicyclic (meth)acrylate compounds, such as cyclohexyl (meth)acrylate, isobornyl (meth)acrylate, adamantyl (meth)acrylate, norbornyl (meth)acrylate, dicyclopentenyl (meth)acrylate, dicyclopentenyloxyethyl (meth)acrylate, and menthyl (meth)acrylate;
aromatic ring-containing (meth)acrylate compounds, such as 2-phenoxymethyl (meth)acrylate, phenoxyethyl (meth)acrylate, phenyl (meth)acrylate, and benzyl (meth)acrylate; alkoxyalkyl group-containing (meth)acrylate compounds, such as methoxyethyl (meth)acrylate, ethoxyethyl (meth)acrylate, and butoxyethyl (meth)acrylate;
hydroxyl group-containing (meth)acrylate compounds, such as 2-hydroxyethyl (meth)acrylate, 2-hydroxypropyl (meth)acrylate, 3-hydroxypropyl (meth)acrylate, 4-hydroxybutyl (meth)acrylate, polyethylene glycol mono(meth)acrylate, polypropylene glycol mono(meth)acrylate, and pentaerythritol mono(meth)acrylate;
ether-type (meth)acrylate compounds, such as ethylene glycol monomethyl ether (meth)acrylate, ethylene glycol monoethyl ether (meth)acrylate, ethylene glycol monobutyl ether (meth)acrylate, diethylene glycol monomethyl ether (meth)acrylate, diethylene glycol monoethyl ether (meth)acrylate, diethylene glycol monobutyl ether (meth)acrylate, diethylene glycol mono-2-ethylhexyl ether (meth)acrylate, and dipropylene glycol monomethyl ether (meth)acrylate;
nitrogen-containing alkyl (meth)acrylate compounds, such as N,N-dimethylaminoethyl (meth)acrylate and N,N-diethylaminoethyl (meth)acrylate;
carboxyl group-containing (meth)acrylate compounds, such as 2-(meth)acryloyloxyethyl succinate and 2-(meth)acryloyloxyethyl-phthalate;
phosphate ester-type (meth)acrylate compounds, such as (meth)acryloyloxyethyl phosphate, (meth)acryloyloxypropyl phosphate, ethyl (meth)acrylate hexanoate phosphate, and pentyl (meth)acrylate propanoate phosphate;
(meth)acrylamide compounds, such as (meth)acrylamide, dimethyl (meth)acrylamide, diethyl (meth)acrylamide, 2-hydroxyethyl (meth)acrylamide, 2-hydroxyethyl-N-methyl (meth)acrylamide, 3-hydroxypropyl (meth)acrylamide, N-methyl (meth)acrylamide, N-hydroxyethyl (meth)acrylamide, N-ethyl (meth)acrylamide, N-methylol (meth)acrylamide, N,N-dimethyl (meth)acrylamide, N,N-diethyl (meth)acrylamide, N,N-dipropyl (meth)acrylamide, N,N-dibutyl (meth)acrylamide, N,N-diisobutyl (meth)acrylamide, N,N-di-tert-butyl (meth)acrylamide, and N,N-dimethylaminoethyl (meth)acrylamide;
heterocycle-containing (meth)acrylate compounds, such as glycidyl (meth)acrylate, 4-(meth)acryloyloxymethyl-2-cyclohexyl-1,3-dioxolane, (2-methyl-2-ethyl-1,3-dioxolan-4-yl)methyl (meth)acrylate, tetrahydrofurfuryl (meth)acrylate, (3-ethyloxetan-3-yl)methyl (meth)acrylate, 4-hydroxybutyl (meth)acrylate glycidyl ether, (meth)acryloylmorpholine, N-(meth)acryloyloxyethyl hexahydrophthalimide, pentamethylpiperidyl (meth)acrylate, isocyanuric acid di(meth)acrylate, isocyanuric acid tri(meth)acrylate, triazine tri(meth)acrylate, N-(meth)acryloyloxysuccinimide, and N-(meth)acryloyloxyphthalimide;
vinyl or allyl-type compounds, such as styrene, p-chlorostyrene, vinyltoluene, α-methylstyrene, dichlorostyrene, divinylbenzene, t-butylstyrene, vinyl acetate, diallyl phthalate, diallyl fumarate, triallyl isocyanurate, vinylbenzyl butyl ether, vinylbenzyl hexyl ether, divinylbenzyl ether, and allyl (meth)acrylate;
diacrylate compounds, such as ethylene glycol di(meth)acrylate, 1,4-butanediol di(meth)acrylate, 1,6-hexanediol di(meth)acrylate, ethoxylated hexanediol di(meth)acrylate, diethylene glycol di(meth)acrylate, neopentyl glycol di(meth)acrylate, polyethylene glycol di(meth)acrylate, polypropylene glycol di(meth)acrylate, polytetramethylene glycol di(meth)acrylate, tetraethylene glycol di(meth)acrylate, and bisphenol A di(meth)acrylate;
tri(meth)acrylate compounds, such as trimethylolpropane tri(meth)acrylate, glycerol tri(meth)acrylate, pentaerythritol tri(meth)acrylate, dipentaerythritol tri(meth)acrylate, tris((meth)acryloyloxyethyl) isocyanurate, tris(2-hydroxyethyl) isocyanurate tri(meth)acrylate, propoxylated glycerol tri(meth)acrylate, and propoxylated pentaerythritol tri(meth)acrylate; multifunctional (meth)acrylate compounds having four or more functional groups, such as pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and ditrimethylolpropane hexa(meth)acrylate; polymer (meth)acrylate compounds, such as polyester (meth)acrylate, polyether (meth)acrylate, and urethane (meth)acrylate; and ethylene oxide-modified products thereof, propylene oxide-modified products thereof, and lactone-modified products thereof.

In the composition containing the polytetramethylene glycol-based (meth)acrylate compound of the present invention, the polymerizable compound (reactive diluent) content is not particularly limited. The content can be appropriately determined in consideration of the reactivity with the polytetramethylene glycol-based (meth)acrylate compound, the effect on the physical properties of the cured product, and so forth. When the polymerizable compound (reactive diluent) is used, the amount used can be, for example, 95% or less by mass, preferably 80% or less by mass, and more preferably 70% or less by mass, based on 100% by mass of the total amount of the composition. The lower limit of the amount used is 0% or more by mass, for example 1% or more by mass, preferably 5% or more by mass, and more preferably 10% or more by mass.

### (Additive)

The composition containing the polytetramethylene glycol-based (meth)acrylate compound may further contain various additives in addition to the curing agent and the polymerizable compound (reactive diluent). Examples of the additives include one or more types selected from the group consisting of, for example, polymerization inhibitors (for example, the polymerization inhibitors described in "<Production Method> of [Polytetramethylene Glycol-Based (Meth)acrylate Compound]"), organic solvents (for example, the organic solvents described in "<Production Method> of [Polytetramethylene Glycol-Based (Meth)acrylate Compound]"), curing accelerators, flame retardants, anti-aging agents, antioxidants, heat stabilizers, light stabilizers, lubricants (such as waxes), antibacterial agents, antifungal agents, leveling agents, colorants, luster-imparting agents, fillers, tackifiers, surface conditioners, surfactants, defoaming agents, wetting agents, rust inhibitors, leveling agents, chain transfer agents (such as polythiol compounds), viscosity modifiers, sensitizers, adhesion promoters (such as silane coupling agents), plasticizers, and antistatic agents. The amount of each additive used is not particularly limited as long as it does not impair the properties of the polytetramethylene glycol-based (meth)acrylate compound, and an amount necessary to impart the desired properties can be used.

### [Cured Product of Polytetramethylene Glycol-Based (Meth)acrylate Compound or Composition Containing the Same]

A method for obtaining a cured product of the polytetramethylene glycol-based (meth)acrylate compound of the present invention or the composition containing the same is not particularly limited.

For example, it can be obtained by applying energy to the polytetramethylene glycol-based (meth)acrylate compound or the composition containing the same to cure it.

The energy to be applied is not particularly limited as long as it polymerizes and cures the polytetramethylene glycol-based (meth)acrylate compound or the composition containing the same. Examples thereof include one or more types of means selected from the group consisting of, for example, irradiation with active energy rays (for example, ultraviolet rays, visible rays, laser light, electron beams, X-rays, α-rays, β-rays, γ-rays, neutron beams, plasma, and microwaves), and heating. The amount of energy to be applied is not particularly limited, and can be, for example, 100 mJ/cm² or more and 1,000 mJ/cm² or less.

Among these, as the active energy rays, light rays, such as ultraviolet rays, infrared rays, or visible rays, are preferred, and ultraviolet rays (for example, a wavelength of 320 nm to 415 nm) are more preferably used. The ultraviolet light source is not particularly limited, and examples thereof include xenon lamps, high-pressure mercury lamps, ultra-high-pressure mercury lamps, carbon arc lamps, metal halide lamps, chemical lamps, electrodeless lamps, and LED lamps.

In the present invention, by mixing an anaerobic curing catalyst into the polytetramethylene glycol-based (meth)acrylate compound or a composition containing the same, anaerobic curability can be imparted, and it can be obtained by anaerobic curing. In this case, it can be made into a one-component type.

Examples of the anaerobic curing catalyst include one or more types selected from the group consisting of, for example, imide-type compounds, amine-type compounds, azole-type compounds, mercaptan-type compounds, and hydrazine-type compounds. Among these, from the viewpoint of improving anaerobic curability, imide-type compounds are preferred.

The imide-type compounds are one or more types selected from compounds containing a group represented by the following formula (2) or (3), or salts thereof:

-CONHCO- ··· (2)

-CONHSO₂- ··· (3).

Examples of the imide-type compounds include one or more types selected from the group consisting of, for example, o-benzoic sulfimide (saccharin), succinimide, phthalimide, or salts thereof (particularly salts of alkali metals, such as sodium and potassium).

Examples of the amine-type compounds include one or more types selected from the group consisting of, for example, heterocyclic secondary amines, such as 1,2,3,4-tetrahydroquinoline and 1,2,3,4-tetrahydroquinaldine, heterocyclic tertiary amines, such as quinoline, methylquinoline, quinaldine, and quinoxalinephenazine, and aromatic tertiary amines, such as N,N-dimethyl-anisidine and N,N-dimethylaniline.

Examples of the azole-type compounds include one or more compounds selected from the group consisting of, for example, 1,2,4-triazole, oxazole, oxadiazole, thiadiazole, benzotriazole, hydroxybenzotriazole, benzoxazole, 1,2,3-benzothiadiazole, and 3-mercaptobenzotriazole.

Examples of the mercaptan-type compounds include one or more compounds selected from the group consisting of, for example, straight-chain mercaptans, such as n-dodecyl mercaptan, ethyl mercaptan, and butyl mercaptan.

Examples of the hydrazine-type compounds include one or more types selected from the group consisting of, for example, 1-acetyl-2-phenylhydrazine, 1-acetyl-2-(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(p-methoxyphenyl)hydrazine, 1-acetyl-2-(2'-phenylethylhydrazine), p-nitrophenylhydrazine, p-trisulfonylhydrazide, 1-acetyl-2-methylhydrazine, 1-phenylsemicarbazide, 2-phenyl-t-butylcarbazate, and succinic acid di(phenylhydrazide).

In the present invention, by mixing a redox initiator into the polytetramethylene glycol-based (meth)acrylate compound or a composition containing the same, it can be obtained by redox polymerization. In this case, it can be made into a two-component type.

Examples of the redox initiator include one or more types of redox initiators each formed from an organic peroxide or a persulfate and a reducing agent.

Examples of the organic peroxide include one or more types selected from the group consisting of, for example, cumene hydroperoxide, para-menthane hydroperoxide, tertiary butyl hydroperoxide, diisopropylbenzene dihydroperoxide, methyl ethyl ketone peroxide, benzoyl peroxide, and tertiary butyl peroxybenzoate.

Among these organic peroxides, hydroperoxides are preferred, and cumene hydroperoxide is particularly preferred, because of their stability in room temperature (25°C) environment, ease of handling, and reactivity, where the reaction is easily initiated at room temperature in combination with a reducing agent.

Examples of the persulfate include one or more types selected from the group consisting of, for example, sodium persulfate, potassium persulfate, and ammonium persulfate.

The reducing agent is not particularly limited as long as it reacts with an organic peroxide or a persulfate to generate radicals. Examples thereof include amine compounds, thiourea derivatives, and metal compounds. The reducing agents may be used alone or in combination of two or more types.

Examples of the amine compounds include one or more types selected from the group consisting of, for example, triethylamine, tripropylamine, tributylamine, N,N-dimethyl-para-toluidine, benzimidazole, and reaction condensates of amines and aldehydes.

Examples of the thiourea derivatives include one or more types selected from the group consisting of, for example, 2-mercaptobenzimidazole, methylthiourea, dibutylthiourea, tetramethylthiourea, and ethylenethiourea.

Examples of the metal compounds include one or more types selected from the group consisting of, for example, cobalt naphthenate, copper naphthenate, vanadyl acetylacetonate, vanadyl stearate, vanadium naphthenate, vanadium acetylacetonate, and vanadium benzoylacetonate.

Examples of preferred redox initiators include a combination of a persulfate and a reducing agent (for example, sodium metabisulfite, sodium hydrogen sulfite, a thiourea compound, and so forth); a combination of an organic peroxide and a tertiary amine (for example, a combination of benzoyl peroxide and dimethylaniline, a combination of cumene hydroperoxide and anilines, and so forth); and a combination of an organic peroxide and a transition metal (for example, a combination of cumene hydroperoxide and a trivalent or tetravalent vanadium compound, and so forth). The redox initiators may be used alone or in combination of two or more types.

The polytetramethylene glycol-based (meth)acrylate compound of the present invention or a composition containing the same can be cured after application on a substrate, after injection into a mold, or in a 3D printer, providing a cured product.

Examples of the substrate include one or more types selected from the group consisting of, for example, metals, plastics, glass, ceramics, inorganic materials, wood, paper, plastics, and composites of one or more of these.

The coating method is not particularly limited, and examples thereof include an applicator, a bar coater, a roll coater, a knife coater, a gravure coater, a spray coater, a comma coater, a lip coater, gravure printing, screen printing, brush coating, and inkjet printing. The amount applied is not particularly limited, and, for example, can be adjusted in such a manner that the cured film has a thickness of 1 µm or more and 50 µm or less.

### [Applications of Polytetramethylene Glycol-Based (Meth)acrylate Compound, Composition Containing the Same, and Cured Product]

The applications of the polytetramethylene glycol-based (meth)acrylate compound, the composition containing the same, and curing according to the present invention are not particularly limited. For example, they can be used as constituent components for adhesives, pressure-sensitive adhesives, paints, inks, molding materials, laminates, building interior and exterior materials, automotive interior and exterior materials, optical members, 3D printer materials, and so forth.

### EXAMPLES

The present invention will be described in detail with reference to examples, but the scope of the present invention is not limited to these.

In the following description, "parts" or "%" means "parts by mass" or "% by mass" unless otherwise specified.

### [Measurement and Calculation Methods]

In the polytetramethylene glycol-based (meth)acrylate compounds according to Examples 1 to 3 and Comparative Examples 1 to 3, the measurement methods of the viscosity, the amount of urethane linkages, the number-average molecular weight, and the weight-average molecular weight are described below.

The measurement methods of the elastic modulus (MPa) and maximum point stress (MPa) of the cured products of the polytetramethylene glycol-based (meth)acrylate compounds according to Examples 1 and 3 are also described below.

### <Viscosity>

The viscosity of each of the polytetramethylene glycol-based (meth)acrylate compounds was measured at 25°C using a B-type viscometer (TVB-15M type viscometer, manufactured by Toki Sangyo Co., Ltd.).

### <Amount of Urethane Linkages>

The amount of urethane linkages was calculated according to the following formula:

Amount of urethane linkages (mmol/g) = amount of substance (mmol) of isocyanate groups that react with polyol compound (a) ÷ weight (g) of polytetramethylene glycol-based (meth)acrylate compound to be obtained.

### <Number-Average Molecular Weight>

The number-average molecular weight of the polytetramethylene glycol-based (meth)acrylate compound was measured using a high-performance GPC instrument (HLC-8320GPC, manufactured by Tosoh Corporation).

### <Weight-Average Molecular Weight>

The weight-average molecular weight of the polytetramethylene glycol-based (meth)acrylate compound was measured using a high-performance GPC instrument (HLC-8320GPC, manufactured by Tosoh Corporation).

### <Elastic Modulus>

Measurement was performed using a universal tensile tester (Autograph, manufactured by Shimadzu Corporation) in an environment of a temperature of 23°C and a humidity of 50% RH. The test specimen was a type 3 dumbbell, and the tensile test was performed at a test speed of 100 mm/min. The elastic modulus was measured at a strain of 1% to 3% with respect to gauge marks (20 mm).

### <Maximum Point Stress>

Measurement was performed using a universal tensile tester (Autograph, manufactured by Shimadzu Corporation) in an environment of a temperature of 23°C and a humidity of 50% RH. The test specimen was a type 3 dumbbell, and the tensile test was performed at a test speed of 100 mm/min.

### [Example 1]

In a 500-mL four-neck separable flask equipped with a stirrer, a thermometer, and a condenser, 150 g of polytetramethylene glycol (OH value: 1,554) was weighed as a polyol compound (a) ([OH] = 96.5 mmol). The mixture was stirred under high vacuum at 120°C for 3 hours to remove moisture contained in the polyol. After cooling the system to room temperature, 150 g of toluene, 3.01 g of hexamethylene diisocyanate ([NCO] = 35.8 mmol) as a chain extender (b), and 100 ppm of a tin catalyst based on the polyol compound were added under a stream of nitrogen. The reaction was performed under a stream of nitrogen at 80°C for 3 hours to synthesize a urethane prepolymer. The temperature of the reaction solution was reduced to 50°C or lower, and 15.0 g of 2-methacryloyloxyethyl isocyanate ([NCO] = 96.7 mmol) was added as a terminal (meth)acrylating agent (c), and the reaction was performed at 80°C for 2 hours. The solvent and excess 2-methacryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound. Table 2 presents the elastic modulus (MPa) and maximum point stress (MPa) of the cured product of the resulting polytetramethylene glycol-based (meth)acrylate compound.

### [Example 2]

In a 500-mL four-neck separable flask equipped with a stirrer, a thermometer, and a condenser, 150 g of polytetramethylene glycol (OH value: 1,554) was weighed as a polyol compound (a) ([OH] = 96.5 mmol). The mixture was stirred under high vacuum at 120°C for 3 hours to remove moisture contained in the polyol. After cooling was performed to room temperature, 150 g of toluene, 3.01 g of hexamethylene diisocyanate ([NCO] = 35.8 mmol) as a chain extender (b), and 100 ppm of a tin catalyst based on the polyol compound were added under a stream of nitrogen. The reaction was performed under a stream of nitrogen at 80°C for 3 hours to synthesize a urethane prepolymer. The temperature of the reaction solution was reduced to 50°C or lower, and 15.0 g of 2-acryloyloxyethyl isocyanate ([NCO] = 96.7 mmol) was added as a terminal (meth)acrylating agent (c), and the reaction was performed at 80°C for 2 hours. The solvent and excess 2-acryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound.

### [Example 3]

In a 500-mL four-neck separable flask equipped with a stirrer, a thermometer, and a condenser, 200 g of polytetramethylene glycol (OH value: 1,554) ([OH] = 129 mmol) was weighed as polyol compound (a), and the mixture was stirred under high vacuum at 120°C for 23 hours to remove moisture contained in the polyol. After the system was cooled to room temperature, 110.6 g (122 mmol, 0.95 equivalents relative to [OH]) of a 1.0 M solution of potassium t-butoxide in THF (tetrahydrofuran) was added under a nitrogen atmosphere. After THF was removed under reduced pressure, the alkoxylation reaction was performed at 120°C while removing the formed t-butanol under reduced pressure. After cooling the reaction solution to 50°C or lower, 100 g of THF was added under a nitrogen atmosphere, followed by the dropwise addition of 30.25 g of dibromobutane/THF solution ([Br] = 85.8 mmol) as a chain extender (b), and the reaction was performed at 90°C for 3 hours. The by-product potassium bromide was removed by desalting purification through centrifugation, thereby providing polytetramethylene glycol with an increased molecular weight. The resulting polytetramethylene glycol was weighed into a 500-mL four-neck separable flask equipped with a stirrer, a thermometer, and a condenser, and stirred under high vacuum at 120°C for 3 hours to remove moisture contained in the polyol. After the temperature in the system was reduced to room temperature, 150 g of toluene, 15.0 g of 2-methacryloyloxyethyl isocyanate ([NCO] = 96.7 mmol) as a terminal (meth)acrylating agent (c), and 100 ppm of a tin catalyst based on the polyol compound were added under a stream of nitrogen, and the reaction was performed at 80°C for 2 hours. The solvent and excess 2-methacryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound. Table 2 presents the elastic modulus (MPa) and maximum point stress (MPa) of the cured product of the resulting polytetramethylene glycol-based (meth)acrylate compound.

### [Comparative Example 1]

In a 500-mL four-neck separable flask equipped with a stirrer, a thermometer, and a condenser, 150 g of polytetramethylene glycol (OH value: 969) was weighed as a polyol compound (a) ([OH] = 154.8 mmol). The mixture was stirred under high vacuum at 120°C for 3 hours to remove moisture contained in the polyol. After cooling was performed to room temperature, 150 g of toluene, 11.0 g of hexamethylene diisocyanate ([NCO] = 130.8 mmol) as a chain extender (b), and 100 ppm of a tin catalyst based on the polyol compound were added under a stream of nitrogen. The reaction was performed under a stream of nitrogen at 80°C for 3 hours to synthesize a urethane prepolymer. The temperature of the reaction solution was reduced to 50°C or lower, and 8.0 g of 2-methacryloyloxyethyl isocyanate ([NCO] = 51.6 mmol) was added as a terminal (meth)acrylating agent (c), and the reaction was performed at 80°C for 2 hours. The solvent and excess 2-methacryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound.

### [Comparative Example 2]

In a 500-mL four-neck separable flask equipped with a stirrer, a thermometer, and a condenser, 150 g of polytetramethylene glycol (OH value: 1,554) was weighed as a polyol compound (a) ([OH] = 96.5 mmol). The mixture was stirred under high vacuum at 120°C for 3 hours to remove moisture contained in the polyol. After cooling was performed to room temperature, 150 g of toluene, 6.01 g of hexamethylene diisocyanate ([NCO] = 71.5 mmol) as a chain extender (b), and 100 ppm of a tin catalyst based on the polyol compound were added under a stream of nitrogen. The reaction was performed under a stream of nitrogen at 80°C for 3 hours to synthesize a urethane prepolymer. The temperature of the reaction solution was reduced to 50°C or lower, and 8.0 g of 2-methacryloyloxyethyl isocyanate ([NCO] = 51.6 mmol) was added as a terminal (meth)acrylating agent (c), and the reaction was performed at 80°C for 2 hours. The solvent and excess 2-methacryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound.

### [Comparative Example 3]

In a 500-mL four-neck separable flask equipped with a stirrer, a thermometer, and a condenser, 150 g of polytetramethylene glycol (OH value: 1,554) was weighed as a polyol compound (a) ([OH] = 96.5 mmol). The mixture was stirred under high vacuum at 120°C for 3 hours to remove moisture contained in the polyol. After cooling was performed to room temperature, 150 g of toluene and 9.0 g of 4,4'-diphenylmethane diisocyanate ([NCO] = 71.9 mmol) as a chain extender (b) were added under a stream of nitrogen. The reaction was performed under a stream of nitrogen at 80°C for 3 hours to synthesize a urethane prepolymer. The temperature of the reaction solution was reduced to 50°C or lower, and 8.0 g ([NCO] = 51.6 mmol) of 2-methacryloyloxyethyl isocyanate as a terminal (meth)acrylating agent (c) and 100 ppm of a tin catalyst based on the polyol compound were added as a catalyst, followed by reaction at 80°C for 2 hours. The solvent and excess 2-methacryloyloxyethyl isocyanate were removed under reduced pressure to provide a polytetramethylene glycol-based (meth)acrylate compound. Table 1 presents the viscosity (Pa·s), amount of urethane linkages (mmol/g), number-average molecular weight, and weight-average molecular weight of the resulting polytetramethylene glycol-based (meth)acrylate compound.

**[Table 1]**

| | Example | | | Comparative Example | | |
|---|---|---|---|---|---|---|
| | 1 | 2 | 3 | 1 | 2 | 3 |
| Viscosity (Pa·s) | 54 | 42 | 58 | 1.596 | 866 | 1.033 |
| Amount of urethane linkages (mmol/g) | 0.234 | 0.234 | 0 | 0.810 | 0.458 | 0.450 |
| Number-average molecular weight | 10,411 | 10,147 | 11,731 | 27,115 | 25,337 | 19,963 |
| Weight-average molecular weight | 18,165 | 17,848 | 23,189 | 41,019 | 39,483 | 32,458 |

**[ Table 2]**

| | Example | |
|---|---|---|
| | 1 | 3 |
| Elastic modulus (MPa) | 10.6 | 3.7 |
| Maximum point stress (MPa) | 2.52 | 1.92 |
| Viscosity (Pa·s) | 54 | 58 |
| Amount of urethane linkages (mmol/g) | 0.234 | 0 |
| Number-average molecular weight | 10,411 | 11,731 |
| Weight-average molecular weight | 18,165 | 23,189 |

From Table 1, it can be seen that the polytetramethylene glycol-based (meth)acrylate compounds of Examples 1 to 3 according to the present invention are lower in viscosity compared with the polytetramethylene glycol-based (meth)acrylate compounds of Comparative Examples 1 to 3. From Table 2, it can be seen that in Examples 1 and 3 of the present invention, cured products having practical elastic moduli and maximum point stresses can be formed.

## Claims

1. A polytetramethylene glycol-based (meth)acrylate compound containing a terminal (meth)acrylate group,
wherein the polytetramethylene glycol-based (meth)acrylate compound containing the terminal (meth)acrylate group is obtained by reaction of at least a polyol compound (a), a chain extender (b), and a terminal (meth)acrylating agent (c),
the polyol compound (a) contains a polytetramethylene glycol,
the terminal (meth)acrylating agent (c) contains a (meth)acrylate compound containing a functional group reactive with a functional group contained in the chain extender or contains a (meth)acrylate compound containing a functional group reactive with a hydroxy group, and
a viscosity at 25°C is 10 Pa·s or more and 300 Pa·s or less.

2. The polytetramethylene glycol-based (meth)acrylate compound containing the terminal (meth)acrylate group according to claim 1, wherein the polytetramethylene glycol-based (meth)acrylate compound containing the terminal (meth)acrylate group is obtained by reaction of the terminal (meth)acrylating agent (c) and a polytetramethylene glycol-based prepolymer that is obtained by reaction of at least the polyol compound (a) and the chain extender (b), and wherein an amount of urethane linkages in the polytetramethylene glycol-based prepolymer is 0 mmol/g or more and 0.43 mmol/g or less.

3. The polytetramethylene glycol-based (meth)acrylate compound according to claim 1 or 2, wherein the chain extender (b) is one or more types selected from the group consisting of the following (i) to (iv):
(i) aliphatic polyisocyanate compounds;
(ii) alicyclic polyisocyanate compounds;
(iii) biuret forms, isocyanurate forms, adduct forms, allophanate forms, carbodiimide forms, or polymeric forms of aliphatic polyisocyanate compounds; and
(iv) biuret forms, isocyanurate forms, adduct forms, allophanate forms, carbodiimide forms, or polymeric forms of alicyclic polyisocyanate compounds.

4. A cured product of the polytetramethylene glycol-based (meth)acrylate compound according to claim 1 or 2.

5. A composition, comprising the polytetramethylene glycol-based (meth)acrylate compound according to claim 1 or 2.

6. A cured product of the composition according to claim 5.
